# EUROPÄISCHE PATENTSCHRIFT

(11) **EP 0 417 248 B1**
(45) Veröffentlichungstag und Bekanntmachung des Hinweises auf die Patenterteilung: **06.10.1993**
(21) Anmeldenummer: 90905466.0
(22) Anmeldetag: 02.04.1990
(51) Int. Cl.: H01S 3/038

(54) **ELEKTRODE FÜR GEPULSTE GAS-LASER UND VERFAHREN ZU IHRER HERSTELLUNG**
ELECTRODE FOR PULSED GAS LASER, AND PROCESS FOR ITS MANUFACTURE
ELECTRODE POUR LASERS A GAZ EN REGIME PULSE ET PROCEDE DE FABRICATION CORRESPONDANT

(30) Priorität: 04.04.1989 DE 3910773
(43) Veröffentlichungstag der Anmeldung: 20.03.1991
(73) Patentinhaber: DODUCO GMBH + Co Dr. Eugen Dürrwächter, 75172 Pforzheim (DE); ELTRO GmbH Gesellschaft für Strahlungstechnik, D-69011 Heidelberg (DE)
(72) Erfinder: BOSCH, Wolfgang, D-7530 Büchenbronn-Büchenbronn (DE); BREGEL, Thomas, D-7537 Remchingen-Nöttingen (DE); GANZ, Joachim, D-7267 Unterreichenbach-Kapfenhardt (DE); MICHAL, Roland, D-7530 Pforzheim (DE); SAEGER, Karl, Erdmann, D-7530 Pforzheim (DE); SCHREINER, Ludwig, D-7530 Pforzheim (DE); PREIN, Franz, D-6903 Neckargemünd-Waldhilsbach (DE); WIEGAND, Jürgen, D-6904 Eppelheim (DE)
(74) Vertreter: Twelmeier, Ulrich, Dipl.Phys.
(86) Internationale Anmeldenummer: EP9000516
(87) Internationale Veröffentlichungsnummer: WO9012434

(56) Entgegenhaltungen:
- DE-A- 3 642 749
- DE-A- 3 817 145
- US-A- 4 122 411
- PATENT ABSTRACTS OF JAPAN, Band 9, Nr. 102 (E-312)(1825), 4. Mai 1985 & JP-A-59227183
- IEEE JOURNAL OF QUANTUM ELECTRONICS, Band QE-19, Nr. 5, Mai 1983, IEEE, (New York, US); A.L.S. Smith et al.: "Cathode materials for sealed CO2 waveguide lasers", Seiten 815-820
- PATENT ABSTRACTS OF JAPAN, Band 12, Nr. 489 (E-696) (3336), 21. Dezember 1988 & JP-A-63-204676
- SOVIET JOURNAL OF QUANTUM ELECTRONICS, Band 16, Nr. 12, Dezember 1986, American Institute of Physics, (New York, NY, US), R.V. Arutyunyan et al.: Electrode effects in a pulse-periodic excimer laser", Seiten 1589-1592
- THIN SOLID FILMS, Band 63, Nr. 1, Oktober 1979, Elsevier Sequoia S.A., (Lausanne, CH); I.E: Kanter et al.: "Surface metallization studies for excimer laser electrodes", Seiten 119-120

## Beschreibung

Die Erfindung geht aus von einer Elektrode mit den im Oberbegriff des Anspruchs 1 angegebenen Merkmalen.

In Gasentladungskammern, welche in gepulsten Gas-Lasern, beispielsweise in CO₂-Lasern oder in Excimer-Lasern verwendet werden, hat man zwei einander gegenüberliegende, zur optischen Achse parallele Elektroden, zwischen denen die elektrischen Entladungen stattfinden, welche das in der Gasentladungskammer eingeschlossene Gas zum Aussenden der Laserstrahlung anregen. Typische Gas-Laser können im gepulsten Betrieb Impulsleistungen von einigen Megawatt und mehr erbringen, wobei typischerweise die Impulsdauer größenordnungsmässig 50 ns und die Größe der Elektrodenfläche einige 10 cm² beträgt. Die größten Impulsleistungen erreicht man mit Excimer-Lasern. Die Gasfüllung von typischen Excimer-Lasern enthält 5 bis 10 % eines aktiven Edelgases wie z.B. Krypton, 0,1 bis 0,5 % eines Halogen-Gases, insbesondere Fluor oder Chlor, und ein leichtes Puffergas wie Helium oder Neon bei einem Gesamtdruck von 1,5 x 10⁵ bis 4 x 10⁵ N/m².

An die Elektroden in Gasentladungskammern von Gas-Lasern werden unterschiedliche Anforderungen gestellt. Die grundlegende Anforderung besteht darin, dass die Elektroden besonders geeignet sein müssen, Elektronen austreten zu lassen, die eine diffuse Glimmentladung ermöglichen, die sich möglichst gleichmässig über die zur Verfügung stehende Elektrodenfläche ausbreiten soll. Bei den bekannten Gas-Lasern mit elektronegativen Anteilen in der Gasatmosphäre wie z.B. Sauerstoff in CO₂- und CO-Lasern oder Fluor und Chlor in Excimer-Lasern beobachtet man jedoch häufig, dass die Gasentladung, meist in ihrer Spätphase, von einer Glimm- in eine Bogenentladung umschlägt. Dies liegt daran, dass Elektronen, die von der Vorionisationseinrichtung zur Verfügung gestellt werden, sich an den elektronegativen Atomen oder Molekülen anlagern und somit nicht mehr für den Entladungsprozeß zur Verfügung stehen. Falls die Kathode nicht genügend viele Elektronen nachliefern kann, schlägt die Entladung um. Die nachteiligen Folgen solcher Bogenentladungen sind zahlreich. Zunächst einmal tragen Bogenentladungen nichts zum Laserprozeß bei, so dass die Pulsleistung stark herabgesetzt wird. Ausserdem bewirken sie eine verstärkte Elektrodenerosion. Dadurch werden einerseits die Oberfläche der Elektrode aufgerauht und ihr Profil verändert, und andererseits schlägt sich das abgetragene Elektrodenmaterial zu einem beträchtlichen Teil auf den Fenstern der Entladungskammer nieder. Die Reinigung der Fenster ist bei abgeschlossenen Lasern nicht möglich und bei nichtabgeschlossenen Lasern sehr aufwendig.

Da vereinzelte Bogenentladungen nie völlig auszuschließen sind, muß der Elektrodenwerkstoff eine möglichst geringe Sputterneigung aufweisen. Ausserdem wird von dem Werkstoff verlangt, dass er eine hohe elektrische Leitfähigkeit besitzt, um eine möglichst schnelle Ausbreitung des angelegten Spannungspulses über die gesamte Elektrodenoberfläche zu gewährleisten.

Eine weitere Anforderung an den Elektrodenwerkstoff ist eine möglichst hohe thermische Leitfähigkeit, die verhindert, dass sich bei hohen Pulsfrequenzen heiße Stellen (hot spots) auf der Elektrode bilden, die Fußpunkt von Bogenentladungen sein und einbrennen können. Schließlich spielen chemische Reaktionen an der Elektrodenoberfläche eine bedeutende Rolle. Eine örtlich auftretende, starke Erhitzung des Gases kann zu Dissoziationen und chemischen Umwandlungen in dem Gas führen und dessen Eigenschaften ändern. So kann beispielsweise in einem CO₂-Laser, dessen Gasentladungskammer CO₂-Gas mit kleineren Anteilen Stickstoff und Helium unter einem Druck von 1,0 x 10⁵bis 1,5 x 10⁵ N/m² enthält, CO₂ dissoziieren, wodurch ausserordentlich reaktionsfreudiger Sauerstoff entsteht, der seinerseits mit dem Werkstoff der Elektroden oder der Kammerwände reagieren oder sich mit dem in der Gasfüllung enthaltenen Stickstoff zu Stickoxiden umsetzen kann, die ihrerseits wieder elektronegativ sind und der Entladung Elektronen entziehen. Die Elektroden in einem CO₂-Laser müssen deshalb nicht nur möglichst passiv gegenüber den Füllgasen der Gasentladungskammer sein, damit weder die Füllgase noch die Elektrodenoberfläche durch Wechselwirkung miteinander chemisch umgewandelt werden, vielmehr kommt es auch darauf an, dass die Elektroden eine gute Sauerstoffverträglichkeit haben. Darunter versteht man, dass in der Gasentladungskammer bis zu einem möglichst hohen Sauerstoffpartialdruck keine Lichtbogenüberschläge zwischen den Elektroden auftreten sollen.

Weil das Laser-Gas im Verlauf der Gasentladungen mit der Elektrodenoberfläche und mit abgesputtertem Elektrodenmaterial in Wechselwirkung tritt und weil abgesputtertes Elektrodenmaterial sich auf den Fenstern der Laserkammer niederschlägt, ist das Material der Laser-Elektroden nicht nur bestimmend für die Lebensdauer der Elektroden selbst, deren Form sich mit dem Elektrodenabbrand ändert, sondern auch für die Lebensdauer des Laser-Gases und der Laser-Optik. Für den Einsatz von Gas-Lasern in der industriellen Fertigung ist es jedoch wichtig, dass die Wartungsintervalle möglichst lang sind. Bei einem typischen Excimer-Laser mit einer Argon-Fluor-Gasfüllung ist nach ungefähr 1000 Betriebsstunden eine Wartung fällig, bei welcher die Gasfüllung erneuert und die Fenster gereinigt werden. Dadurch kommt es zu beträchtlichen Ausfallzeiten nicht nur durch die Dauer der eigentlichen Wartungsarbeiten, sondern auch dadurch, dass die Elektroden nach jeder Erneuerung der Gasfüllung erneut passiviert werden müssen. Die Passivierungszeit verlängert sich mit jedem Gaswechsel. Unter der Passivierungszeit versteht man diejenige Zeit, die nach einem Gaswechsel benötigt wird, um die Nenn-Ausgangsleistung wieder zu erreichen. Sie liegt je nach Elektrodenwerkstoff zwischen 1 Stunde und 2 Tagen.

Um eine möglichst gleichmässige Gasentladung zwischen den Elektroden zu erhalten, ist es bekannt, als Gestalt für die Elektroden ein Rogowski-Profil zu wählen. Die Erfahrung hat jedoch gezeigt, dass sich dadurch allein das Ausbilden von Entladungszonen mit unterschiedlich hoher Energiedichte nicht ausschließen läßt.

Aus der DE-A-36 42 749 sind Elektroden bekannt, in deren Oberfläche zur Erzielung einer möglichst gleichmässigen Gasentladung und einer möglichst hohen Lebensdauer verschiedene Substanzen fein verteilt **nebeneinander** vorliegen. Z.B. werden in eine Grundsubstanz mit guter elektrischer Leitfähigkeit wie Kupfer 0,1 µm bis 100 µm große Partikel aus einem anderen Material eingelagert, das eine niedrigere Elektronenaustrittsarbeit besitzt. Die Oberfläche dieser Elektroden ist also heterogen aufgebaut. Ergänzend ist eine gewisse Oberflächenrauhigkeit vorgesehen, die durch lokale Feldstärkeerhöhung den Elektronenaustritt durch verstärkte elektrische Feldemission begünstigt.

Die unterschiedlichen Anforderungen an die Elektroden sind im allgemeinen nicht miteinander vereinbar. Für Excimer-Laser werden gegenwärtig zumeist Elektroden aus Nickel oder aus Messing verwendet. Bekannt sind auch vernickelte Aluminium-Elektroden (DE-A-38 17 145). Elektroden aus Messing haben eine typische Lebensdauer von 4000 Betriebsstunden. Für CO₂-Laser sind Nickelelektroden gebräuchlich. Vorgeschlagen wurden auch Elektroden aus Wolfram, Aluminium, Edelstahl, Iridium, Gold oder Platin (W.J. Witteman, "The CO₂Laser", Springer-Verlag 1987, S. 105), die jedoch alle ihre Nachteile haben. Werkstoffe mit guter elektrischer Leitfähigkeit wie Gold, Platin, Silber, Kupfer und Aluminium haben kein besonders gutes Elektronenemissionsvermögen und zum Teil ist auch ihre Beständigkeit gegenüber verschiedenen Füllgasen nicht besonders gut; ausserdem zeigen sie hohe Sputter-Raten. Übergangsmetalle wie Molybdän und Wolfram haben zwar ein günstiges Elektronenemissionsvermögen, aber eine schlechte elektrische Leitfähigkeit und lassen sich nur sehr schwer formgebend bearbeiten (die Herstellung einer Wolframelektrode für einen CO₂-Hochleistungslaser würde schätzungsweise eine Woche in Anspruch nehmen), so dass dieser Weg als Alternative praktisch ausscheidet.

Der vorliegenden Erfindung liegt die Aufgabe zugrunde, Elektroden für gepulste Gas-Laser zu schaffen, die eine noch gleichmässigere, diffuse Entladung ermöglichen und eine längere Lebensdauer sowohl der Gasfüllung als auch der Elektroden selbst zur Folge haben und trotz der für Gas-Laser verlangten großen Elektrodenabmessungen (Elektrodenfläche bis zu einigen dm² und Elektrodenlänge in der Größenordnung von 1 m) ohne größere Schwierigkeiten herzustellen sind.

Diese Aufgabe wird gelöst durch Elektroden mit den im Anspruch 1 angegebenen Merkmalen. Ein vorteilhaftes Verfahren zum Herstellen solcher Elektroden ist im Anspruch 13 angegeben. Vorteilhafte Weiterbildungen der Erfindung sind Gegenstand der Unteransprüche.

Die erfindungsgemäßen Elektroden vereinigen in sich eine Kombination von Merkmalen, die für sich teilweise bekannt gewesen sind, aber in ihrer Kombination zu unerwartet günstigen Eigenschaften der Elektroden führen. So hat es sich beispielsweise gezeigt, dass mit Wolfram beschichtete Kupferelektroden in CO₂-Lasern erst bei einem 4 x so hohen Sauerstoffpartialdruck zu Lichtbogenüberschlägen neigen wie die sonst üblicherweise verwendeten Nickelelektroden, denen die mit Wolfram beschichteten Kupferelektroden auch in der Elektronenemission, in der Gleichmässigkeit der Gasentladung und in der Lebensdauer überlegen sind.

In Abkehr von der Lehre der DE-A-36 42 749 haben die erfindungsgemäßen Elektroden eine homogene Oberflächenschicht, deren Zusammensetzung danach ausgewählt wird, dass sie mit der Gasatmosphäre, in welcher sie bestimmungsgemäß arbeiten soll, verträglich ist, dass sie in dieser Gasatmosphäre einen möglichst geringen Abbrand zeigt und unter diesen einschränkenden Bedingungen ein möglichst gutes Elektronenemissionsvermögen hat.

Die Oberflächenschicht soll erfindungsgemäß nicht dicker als 20 µm sein. Man braucht deshalb bei der Auswahl des Werkstoffs für die Oberflächenschicht auf dessen elektrische Leitfähigkeit keine besondere Rücksicht zu nehmen. Den für die kurzzeitige Bereitstellung der Impulsenergie erforderlichen elektrischen Leitwert kann man vielmehr durch die Auswahl des Träger-Werkstoffs und/oder durch die Auswahl des Materials für eine gegebenenfalls vorgesehene Zwischenschicht sicher stellen. Im übrigen erfolgt die Auswahl des Trägerwerkstoffs im wesentlichen nur unter zwei Gesichtspunkten, nämlich zum einen unter dem Gesichtspunkt einer leichten Bearbeitbarkeit des Materials (es soll erfindungsgemäß tiefziehfähig sein) und zum anderen nach der Korrosionsbeständigkeit gegen das Lasergas. Die Korrosionsbeständigkeit ist wichtig, wenn - wie es zweckmässig ist - die Beschichtung nur auf der aktiven Elektrodenoberfläche erfolgt und dadurch kein vollständiger Schutz des Trägers gegeben ist. Die Wärmeleitfähigkeit kann ergänzend ein Auswahlkriterium sein, wenn eine gut wärmeleitende Zwischenschicht fehlt und die durch die Gasentladung erzeugte Wärme durch den Träger selbst verteilt und abgeleitet werden muss. Je niedriger durch eine hohe Wärmeleitfähigkeit der Zwischenschicht oder - wenn sie fehlt - des Trägers die Temperatur der Elektrodenoberfläche gehalten werden kann, desto geringer ist der Abbrand (Sputterrate) im Betrieb. Je geringer der Abbrand ist, desto weniger Elektrodenmaterial kann sich auf den Fenstern der Laserkammer niederschlagen, so dass die Lebensdauer steigt und die Wartungsintervalle länger werden. In der gleichen Richtung wirkt eine gut wärmeleitende Zwischenschicht bzw. - wenn sie fehlt - ein gut wärmeleitender Träger auch deshalb, weil die gute Wärmeleitfähigkeit i.d.R. mit einer guten elektrischen Leitfähigkeit einhergeht, welche gleichmäßigere Entladungen begünstigt und dadurch die Neigung zur Bildung von Bogenentladungen herabsetzt. Mit sinkender Oberflächentemperatur sinkt zwar das Elektronenemissionsvermögen, doch ist das kein Nachteil, da durch den erfindungsgemäßen Schichtaufbau der Elektrode ein Werkstoff mit hohem Elektronenemissionsvermögen, insbesondere Wolfram, die Oberfläche bilden kann. Eine Ausnahme bildet der Fluorid-Excimer-Laser. Hier scheidet Wolfram als Elektrodenwerkstoff aus, da leicht verdampfendes WF₆ gebildet wird, welches die Fenster des Entladungsgefäßes verunreinigt. Durch Wahl eines weniger gut leitenden Werkstoff für die Zwischenschicht bzw. - wenn sie fehlt - für den Träger kann, wenn gewünscht, eine Erwärmung der Elektrode auf eine höhere Temperatur bewirkt werden, um dadurch die Elektronenemission zu begünstigen. Dadurch, dass man die Anforderungen an die Elektroden teils durch Auswahl des Werkstoffs für den Träger, teils durch Auswahl des Werkstoffs für die Deckschicht, und ggfs. noch durch Auswahl des Werkstoffs für eine Zwischenschicht erfüllt, kann man für unterschiedliche Lasertypen zu optimalen, fortschrittlichen Elektrodenaufbauten kommen. Zur Verwendung in CO₂-Lasern sind hinsichtlich der chemischen Verträglichkeit praktisch alle Materialien für die Oberflächenschicht geeignet, die im Anspruch 1 genannt sind, da der CO₂-Laser keine aggressiven Gase enthält. Mit dem durch Dissoziationen entstehenden reaktionsfreudigen Sauerstoff reagieren diese Werkstoffe nur träge. Besonders geeignet ist das bereits genannte Wolfram.

In chloridhaltigen Excimer-Lasern eignen sich für die Oberflächenschicht die genannten refraktären Werkstoffe ebenfalls besonders. In fluorhaltigen Excimer-Lasern eignen sich für die Oberflächenschicht Chrom sowie Niob, Tantal und Rhenium.

Zusammenfassend liegen die Vorteile der neuen Elektrode darin, dass man für die Elektrodenoberfläche, deren Zusammensetzung für das Elektronenaustrittsvermögen und für den Abbrand maßgebend ist, einen Werkstoff wählt, welcher in der vom Laser-Typ vorgegebenen Gasatmosphäre hinsichtlich des Elektronenaustrittsvermögens und des Abbrandes optimal ist, ohne die Nachteile des gewählten Werkstoffs hinsichtlich seiner Leitfähigkeit und Bearbeitbarkeit inkauf nehmen zu müssen. Da es sich dabei um Werkstoffe handelt, die nur schwer formgebend bearbeitet werden können, wird ihre Verwendung angesichts der Forderungen an Größe und Form der Elektroden erst dadurch wirtschaftlich praktikabel, dass man diese Werkstoffe in einer dünnen Schicht auf einen leicht formbaren Träger aufbringt, der bereits in die für die Elektrode gewünschte Form gebracht ist. Dabei hat man durch die Materialauswahl des Trägers bzw. einer auf ihm vorgesehenen Zwischenschicht zusätzlich den Vorteil, dass man die nicht so gute elektrische und Wärmeleitfähigkeit der Oberflächenschicht durch eine höhere elektrische und Wärmeleitfähigkeit des Trägers bzw. der Zwischenschicht kompensieren kann, solange - wie beansprucht - die mittlere Dicke der Oberflächenschicht eine bestimmte Obergrenze nicht überschreitet.

Untersuchungen zeigen, dass erfindungsgemäß hergestellte Kathoden sich deutlich von Elektroden unterscheiden, die nach dem Stand der Technik gefertigt sind: Auf erfindungsgemäßen Kathoden treten hot spots viel zahlreicher auf, sind aber deutlich weniger intensiv und sehr homogen verteilt, so dass der Umschlag der erwünschten diffusen Glimmentladung in eine unerwünschte Bogenentladung weniger häufig auftritt, wodurch die Lebensdauer und die Wartungsintervalle der Laser wesentlich länger werden. Darüberhinaus hat die verringerte Neigung zu Bogenentladungen den Vorteil, dass die Dauer der Laserimpulse verlängert werden kann.

Für den Träger eignen sich als Werkstoffe besonders Kupfer, Aluminium, Messing, Zinnbronze und Stahl, insbesondere Edelstahl. Die Träger werden aus diesen Werkstoffen durch Tiefziehen geformt. Dadurch kommt man - trotz einer Elektrodenoberfläche aus einem schwer zu bearbeitenden Werkstoff - am einfachsten zu den gewünschten Elektrodenformen. Die Träger müssen dann anschließend nur noch dünn beschichtet, aber nicht mehr formgebend bearbeitet werden. Das ist ein großer Vorteil gegenüber Elektroden, die aus Werkstoffen wie Kupfer-Wolfram bestehen (DE-A-38 17 145), denn solche Elektroden lassen sich in den geforderten Abmessungen nur unter großen Schwierigkeiten herstellen.

Die Oberflächenschicht soll mindestens 3 µm dick sein, damit sie unter dem Einfluss einer Bogenentladung nicht durchschlagen werden kann. Vorzugsweise ist sie nur zwischen 5 µm und 10 µm dick, damit ihre nicht so hohe elektrische und Wärmeleitfähigkeit zur Erzielung einer gleichmässig über die Elektrodenoberfläche verteilt erfolgenden Glimmentladung und Wärmeableitung aus der Oberflächenschicht nicht zu bestimmend ist, diese vielmehr durch die höhere Leitfähigkeit des Werkstoffes unter der Oberflächenschicht noch günstig beeinflußt werden können.

Grundsätzlich kann die Oberflächenschicht unmittelbar auf dem Träger liegen, zumal dann, wenn dieser aus Kupfer oder einem anderen tiefziehfähigen Werkstoff mit hoher elektrischer und Wärmeleitfähigkeit besteht. Vorzugsweise sieht man jedoch zwischen dem Träger und der Oberflächenschicht eine Zwischenschicht vor aus einem Metall mit höherer elektrischer und Wärmeleitfähigkeit, als sie die Oberflächenschicht, vorzugsweise auch der Träger aufweisen. Dadurch erhält man mehr Spielraum für die Werkstoffauswahl für den Träger und kann die Zwischenschicht allein danach auswählen, dass sie eine hohe elektrische und Wärmeleitfähigkeit hat, insbesondere aus Kupfer besteht; die Zwischenschicht könnte auch aus Aluminium oder Silber oder Silber-Kupfer bestehen. Die Zwischenschicht sollte mindestens 5 µm dick sein, damit sie ihrer Aufgabe, Strom und Wärme gleichmässig über die Elektrodenfläche zu verteilen, gerecht werden kann. Aus technischen Gründen (Auftreten von Eigenspannung der Schicht und dadurch verminderte Haftung auf dem Träger) sollte sie nicht dicker sein als 20 µm; eine Dicke von 10 µm ist völlig ausreichend.

Vorzugsweise sorgt man dafür, dass der Übergang von der Zwischenschicht auf die Oberflächenschicht nicht abrupt, sondern allmählich erfolgt. Einen solchen fließenden Übergang von der Zwischenschicht auf die Oberflächenschicht kann man z.B. dadurch erreichen, dass man das Material für beide Schichten durch ein PVD-Verfahren abscheidet, Targets aus beiden Materialien in der Abscheidekammer anordnet und unter Aufrechterhaltung des Vakuums in der Abscheidekammer zunächst das Material für die Zwischenschicht, dann die Materialien für die Zwischenschicht und die Oberflächenschicht im Wechsel abscheidet, mit zunehmender Intensität des Materials für die Oberflächenschicht, und schließlich nur noch das Material für die Oberflächenschicht abscheidet. Die Vorteile eines solchen kontinuierlichen Übergangs liegen in einer verbesserten Haftfestigkeit der Oberflächenschicht und einer verminderten Materialabsputterung beim Betrieb des Lasers. Ein solcher fließender Übergang ist auch sinnvoll und vorteilhaft, wenn für die Zwischenschicht dasselbe Material wie für den Träger gewählt wird, um einen kontinuierlichen Übergang vom Träger auf die Oberflächenschicht zu schaffen, insbesondere in Fällen, in denen für den Träger ein Material mit hoher elektrischer und Wärmeleitfähigkeit gewählt wurde (z.B. Kupfer für eine Zwischenschicht auf einem Kupferträger gefolgt von einer Oberflächenschicht z.B. aus Wolfram).

Ein für die Herstellung erfindungsgemäßer Elektroden besonders geeignetes Verfahren ist Gegenstand des Anspruchs 13. Danach geht man am besten so vor, dass man zunächst den Träger in seiner für die Elektrode vorgesehenen endgültigen Gestalt ausbildet. Der Träger könnte massiv sein, ist aber vorzugsweise ein Profilteil, welches durch Tiefziehen hergestellt wird. Der so vorbereitete Träger muss dann nur noch beschichtet werden. Das Material für die Oberflächenschicht wird erfindungsgemäß durch physikalische Dampfabscheidung (PVD) aus der Gasphase abgeschieden. Die PVD-Abscheidung hat den Vorteil, dass die Oberflächenschicht eine Gestalt erhält, die mit der Gestalt der Trägeroberfläche übereinstimmt; das Oberflächenprofil des Trägers wird durch die PVD-Abscheidung nicht eingeebnet.

Weil das Oberflächenprofil des Trägers durch die PVD-Abscheidung nicht eingeebnet wird, kann man für die Elektroden Träger mit einer mikrorauhen Oberfläche verwenden, die trotz der Beschichtung erhalten bleibt und die Feldelektronenemission begünstigt. Die Oberflächenschicht bedarf dazu keiner Nachbehandlung mehr, um eine definierte Mikro-Rauhigkeit einzustellen; das hat den weiteren Vorteil, dass es nicht zu einer Verunreinigung der Elektrodenoberfläche kommt, die andernfalls mit einer abtragenden Nachbehandlung verbunden wäre. Hochreine Elektrodenoberflächen sind andererseits für den Betrieb eines Gas-Lasers ausserordentlich wichtig.

Die Oberflächenschicht kann homogen aus einem der im Anspruch 1 genannten Metalle abgeschieden werden; es ist aber auch möglich, Gemenge aus den genannten Metallen abzuscheiden, wodurch eine Optimierung der Oberflächeneigenschaften möglich ist.

Die eine oder mehrere ggfs. vorgesehene Zwischenschicht(en) können grundsätzlich nach einem beliebigen Verfahren auf den Träger aufgebracht werden, beispielsweise durch elektrolytische Abscheidung oder durch mechanische Plattierung. Vorzugsweise werden jedoch auch eventuelle Zwischenschichten durch PVD-Abscheidung erzeugt, um den Vorteil zu erhalten, dass erstens keine unerwünschten Substanzen in die Schichten gelangen, diese vielmehr rein bleiben, und zweitens das Profil der Trägeroberfläche nicht eingeebnet wird. Zusammengenommen sollten die auf den Träger aufgebrachten Schichten nicht mehr als 50 µm dick sein.

Ein besonders günstiges Abscheideverfahren ist das Magnetron-Sputtern; dabei wird das elektrische Feld der Glimmentladung zusätzlich durch ein Magnetfeld überlagert. Man erreicht dadurch über eine Steigerung der Zerstäubungsrate wirtschaftlicher relativ dicke und gleichmässige Schichten.

Vor ihrer Verwendung in der Gasentladungskammer werden die erfindungsgemäßen Elektroden vorzugsweise konditioniert und dadurch in ihren Eigenschaften stabilisiert. Dieses Konditionieren erfolgt in einer Gasatmosphäre, die dieselben Bestandteile hat wie die Atmosphäre, in welcher die Elektroden bestimmungsgemäß eingesetzt werden sollen, oder von diesen Bestandteilen wenigstens jene, die für die Stabilisierung der Elektroden wesentlich sind, für einen Excimer-Laser also wenigstens das Halogen, für einen CO₂-Laser Kohlendioxid und/oder Kohlenmonoxid und/oder Sauerstoff, für einen CO-Laser Kohlenmonoxid und/oder Sauerstoff, für Stickstoff-Laser Stickstoff und/oder Sauerstoff; siehe Ansprüche 18 bis 22, in welchen zugleich die für den jeweiligen Zweck besonders geeigneten Metalle für die Oberflächenschicht angegeben sind. Diese Gase, in denen die Konditionierung vorgenommen wird, müssen nicht in derselben Konzentration vorliegen wie in der Gasentladungskammer des Lasers, vielmehr kann man die Zusammensetzung der Gasatmosphäre und die Konzentration ihrer Bestandteile so wählen, wie es für eine möglichst rasche Stabilisierung der Elektroden am günstigsten ist. In aller Regel wird man die Konzentration der für die Stabilisierung wesentlichen Bestandteile höher wählen als in der Gasentladungskammer des Lasers. Auch der Gasdruck kann bei der Konditionierung durchaus ein anderer sein als in der Laserkammer, in der Regel ein geringerer als bei dem bestimmungsgemäßen Einsatz der Elektroden. Dadurch, dass die Konditionierung bereits in der Beschichtungskammer vorgenommen wird, kann sie schneller ablaufen als in einer Laser-Kammer. Weiterhin ist vorteilhaft, dass man sich auf diese Weise den sonst in der Laser-Kammer durchzuführenden Einbrennprozeß (Burn-In-Prozeß) sparen kann, der je nach Typ des Lasers mehrere 100 000 Pulse in Anspruch nehmen kann.

Im Verlauf des Konditionierungsprozesses bildet sich in der Oberflächenschicht eine Passivierungsschicht aus, in welcher Bestandteile des Gases, in dem die Konditionierung stattgefunden hat, teils physikalisch und teils chemisch an die Atome des für die Oberflächenschicht verwendeten Metalls gebunden sind. So bildet sich z.B. beim Konditionieren einer Wolfram-Schicht in einem Laser mit Kohlendioxid-, Kohlenmonoxid- oder Sauerstoffatmosphäre eine Passivierungsschicht aus, in welcher verschiedene Wolframoxide vorliegen, in der Tiefe beginnend mit WO, nach oben hin zunehmend WO₂ und WO₃. Entsprechend können sich bei stickstoffhaltiger Atmosphäre Nitride bilden. Die Passivierungsschicht ist wichtig für die Leistungsfähigkeit des Lasers. Die passivierte Oberfläche hat eine geringere Elektronenaustrittsarbeit als die rein metallische Oberfläche. Die Dicke der Passivierungsschicht hängt ab von der Dauer der Behandlung in dem Gas; vorzugsweise sollte sie ungefähr 100 nm dick sein.

### Kurze Beschreibung der Zeichnung:

- Figur 1: zeigt eine massive Elektrode im Querschnitt, und
- Figur 2: zeigt eine weitere Elektrode im Querschnitt, welche einen Träger hat, der durch Tiefziehen eines Blechs geformt ist.

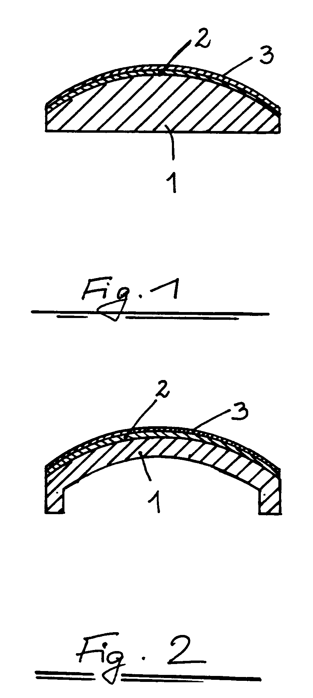

In beiden Fällen handelt es sich um langgestreckte Elektroden. Im Beispiel gemäß Figur 1 ist der Träger 1 ein massives Teil aus einem tiefziehfähigen Metall, welches auf der Rückseite, die keiner Beschichtung bedarf, durch eine ebene Oberfläche und auf der Vorderseite durch eine gewölbte Oberfläche, beispielsweise durch eine zylindermantelförmige Oberfläche begrenzt ist, welche eine Zwischenschicht 2 und auf dieser eine Oberflächenschicht 3 trägt, aus welcher die für die Gasentladung benötigten Elektronen austreten.

Die Elektrode gemäß Figur 2 hat im Prinzip den gleichen Schichtaufbau, doch hat sie anstelle eines massiven Trägers einen verhältnismässig dünnen Träger, welcher durch Tiefziehen aus einem Blech geformt wurde und deshalb keine ebene, sondern eine konkave Rückseite hat.

### Ausführungsbeispiele:

### Beispiel 1:

Die Elektrode hat einen Träger der in Figur 1 dargestellten Gestalt aus Kupfer mit einer 3 µm dicken Oberflächenschicht aus Wolfram, welche auf dem Träger durch Sputtern abgeschieden wurde. Eine Zwischenschicht ist nicht vorhanden. Die Elektrode wird konditioniert, indem sie in einer heliumreichen Atmosphäre, welche Kohlenmonoxid enthält, elektrischen Entladungen ausgesetzt wird, und zwar bei Gasdrücken, Entladespannungen und Strömen, die gegenüber den Verhältnissen in einem CO₂-Laser reduziert sind.

### Beispiel 2:

Es wird eine Elektrode hergestellt mit einem Träger aus einem tiefgezogenen Kupferblech wie in Figur 2 dargestellt. Dieser Träger wird wie im Beispiel 1 beschichtet und konditioniert.

### Beispiel 3:

Es wird eine Elektrode mit einem Träger aus Edelstahl hergestellt, welcher eine Gestalt wie in Figur 1 oder 2 hat. Auf diesem Träger wird durch PVD-Abscheidung zunächst eine 5 µm dicke Kupferzwischenschicht und dann eine 3 µm dicke Oberflächenschicht aus Wolfram abgeschieden. Die Konditionierung der Elektrode erfolgt wie im Beispiel 1 mit der Maßgabe, dass die Atmosphäre als zusätzlichen Bestandteil etwas Sauerstoff enthält.

Die Elektroden aus den Beispielen 1, 2 und 3 eignen sich für die Verwendung in CO₂-Lasern.

### Beispiel 4:

Ein Träger 1 aus Aluminium mit der in Figur 1 oder 2 wiedergegebenen Gestalt wird zur Bildung einer Anode für einen ArF-Excimer-Laser mit einer 3 µm dicken Oberflächenschicht aus Chrom beschichtet. Die Beschichtung erfolgt nach einem PVD-Verfahren. Eine Zwischenschicht ist nicht vorgesehen.

### Beispiel 5:

Es wird eine Elektrode mit einem Träger aus Aluminium oder Edelstahl hergestellt, welcher eine Gestalt wie in Figur 1 oder 2 hat. Auf diesem Träger wird durch Magnetron-Sputtern eine Zwischenschicht aus Kupfer in einer Dicke von ca. 8 µm aufgebracht. Ohne Änderung des Vakuums in der Abscheidekammer wird dann eine ca. 10 µm dicke Wolframschicht auf die Zwischenschicht gebracht. Hierbei sorgt man vorzugsweise für eine kontinuierlichen Übergang von der Kupferzwischenschicht in die Wolfram-Oberflächenschicht, wodurch deren Haftfestigkeit und die Sputterrate verbessert werden.

Die Konditionierung der Elektrode erfolgt in einem Gasgemisch, das bevorzugt CO₂ und O₂ enthält, insbesondere 30 % CO₂ und 1 bis 2 % O₂ , ferner Stickstoff und/oder Helium mit gegenüber dem Laserbetrieb reduziertem Gasdruck (z.B. 0,5 bis 0,8 bar). In diesem Gasgemisch wird eine Glimmentladung oder gepulste elektrische Entladung zwischen zwei Elektroden oder zwischen einer Elektrode und einem Hilfsleiter betrieben. Dies erfolgt vorzugsweise unmittelbar nach dem Herstellen der Oberflächenschicht in der Beschichtungskammer, in welcher die Glimmentladung bzw. die gepulste Entladung mit einer entsprechend dem Gasdruck (verglichen mit der Gasentladungskammer des Lasers) reduzierten Spannung gezündet wird.

Die Konditionierung wird durchgeführt, bis die Wolframschicht bis zu einer Tiefe von ca. 100 nm oxidiert ist; diese Dicke der Passivierungsschicht gewährleistet eine stabile Entladung beim Einsatz in einem CO- oder CO₂-Laser, insbesondere mit hohem Gasdruck (1 bar und mehr). Erreicht wird diese Schichtdicke nach ca. 50 000 Schüssen, wenn man die Konditionierung bei einem Gasdruck von 0,8 bis 1 bar und einem Gasvolumen von ca. 500 ml sowie einer elektrischen Energiedichte von ca. 0,3 J pro cm² Entladungsfläche (effektiv wirksame Elektrodenoberfläche) anwendet.

Das gleiche Ergebnis kann bei niederen Drücken und entsprechend niederen Spannungen durch längere Betriebszeiten erzielt werden. Orientierung ist dabei die ingesamt über die Elektrodenoberfläche eingekoppelte elektrische Energie (ca. 15 kJ/cm² für eine Schichtdicke von ca. 10 µm). Wesentlich geringere Dicken der passivierenden Oxidschichten können zu sich ändernden Gasmischungen und damit zu sich ändernden Lasereigenschaften führen. Wesentlich größere Dicken der passivierenden Oxidschicht können zu schlechteren Entladungen und unstabilen Laserbedingungen führen.

Im Falle von Excimer-Lasern werden mit entsprechenden Techniken anstelle von Oxidschichten Halogenschichten aufgebaut.

### Beispiel 6:

Das Beispiel 5 wird dahingehend abgewandelt, dass die Konditionierung in einem Gasgemisch erfolgt, welches 10 % CO₂ und 2 bis 4 % O₂, zum Rest Stickstoff und/oder Helium enthält.

## Patentansprüche

1. Elektrode für gepulste Gas-Laser, die einen metallischen Träger und eine Oberflächenschicht aus einem vom Trägermaterial verschiedenen Material hat,
**gekennzeichnet durch** die folgende Merkmalskombination:
der Träger (1) besteht aus einem tiefziehfähigen Werkstoff,
die Oberflächenschicht (3) hat eine mittlere Dicke zwischen 3 µm und 20 µm,
und die Oberflächenschicht (3) besteht aus einem oder mehreren der refraktären Metalle Wolfram, Niob, Tantal, Rhenium und Chrom und hat eine geringere Elektronenaustrittsarbeit und eine geringere Wärme- und elektrische Leitfähigkeit als das angrenzende Material unter der Oberflächenschicht (3).

2. Elektrode nach Anspruch 1, **dadurch gekennzeichnet,** dass die Oberflächenschicht (3) zwischen 5 µm und 10 µm dick ist.

3. Elektrode nach Anspruch 1 oder 2, **dadurch gekennzeichnet,** dass der Träger (1) aus Kupfer besteht und die Oberflächenschicht (3) unmittelbar auf dem Träger (1) liegt.

4. Elektrode nach Anspruch 1 oder 2, **dadurch gekennzeichnet,** dass zwischen dem Träger (1) und der Oberflächenschicht (3) eine Zwischenschicht (2) aus einem Metall mit höherer elektrischer und Wärmeleitfähigkeit angeordnet ist, als sie die Oberflächenschicht (3) aufweist.

5. Elektrode nach Anspruch 4, **dadurch gekennzeichnet,** dass die Zwischenschicht (2) eine höhere elektrische und Wärmeleitfähigkeit hat als der Träger (1).

6. Elektrode nach Anspruch 4 oder 5, **dadurch gekennzeich****net**, dass die Zwischenschicht (2) mindestens 5 µm dick ist.

7. Elektrode nach Anspruch 6, **dadurch gekennzeichnet,** dass die Zwischenschicht (2) höchstens 20 µm, vorzugsweise höchstens 10 µm dick ist.

8. Elektrode nach Anspruch 4 oder 5, **dadurch gekennzeichnet,** dass die Zusammensetzung der Zwischenschicht (2) allmählich in die Zusammensetzung der Oberflächenschicht (3) übergeht.

9. Elektrode nach einem der Ansprüche 4 bis 8, **dadurch ge****kennzeichnet,** dass die Zwischenschicht (2) aus Kupfer oder Aluminium besteht.

10. Elektrode nach einem der vorstehenden Ansprüche, **dadurch** **gekennzeichnet,** dass der Träger (1) aus Kupfer, Aluminium, Messing, Zinnbronze oder Stahl, insbesondere aus einem Edelstahl, besteht.

11. Elektrode nach Anspruch 10, **dadurch gekennzeichnet,** dass der Träger (1) ein tiefgezogenes Profilteil ist.

12. Elektrode nach einem der vorstehenden Ansprüche, **da-** **durch gekennzeichnet,** dass die refraktären Metalle in der Oberflächenschicht (3) in homogener Mischung oder Legierung vorliegen.

13. Verfahren zum Herstellen einer Elektrode nach einem der vorstehenden Ansprüche, **gekennzeichnet durch**
- Ausbilden des Trägers (1) in seiner für die Elektrode vorgesehenen endgültigen Gestalt durch Tiefziehen,
- Abscheiden des Metalls für die Oberflächenschicht (3) durch physikalische Dampfabscheidung (PVD).

14. Verfahren nach Anspruch 13 zum Herstellen einer Elektrode nach Anspruch 4, **dadurch gekennzeichnet,** dass auch das Metall bzw. die Metalle für die Zwischenschicht (2) durch PVD abgeschieden wird bzw. werden.

15. Verfahren nach Anspruch 13 oder 14, **dadurch gekenn-** **zeichnet,** dass die Oberflächenschicht (3) und ggfs. auch die Zwischenschicht (2) durch Magnetron-Sputtern aufgebracht werden.

16. Verfahren nach Anspruch 14 oder 15, **dadurch gekenn-** **zeichnet,** dass die Elektrode noch in der PVD-Beschichtungskammer in einer solchen Gasatmosphäre unter Einwirkung elektrischer Entladungen, nämlich in einem Niederdruckplasma, unter Ausbildung einer Passivierungsschicht behandelt wird, welche dieselben Bestandteile oder von diesen wenigstens die für die Stabilisierung der Elektrode wesentlichen Bestandteile enthält wie jene Atmosphäre, in welcher die Elektrode bestimmungsgemäß im Laser eingesetzt werden soll.

17. Verfahren nach Anspruch 16, **dadurch gekennzeichnet,** dass die passivierende Behandlung nicht länger als bis zum Erreichen einer Passivierungsschicht mit einer mittleren Dicke von 100 nm durchgeführt wird.

18. Verfahren nach Anspruch 16 oder 17, **dadurch gekennzeich-** **net,** dass für den Einsatz in CO₂-Lasern die Oberflächenschicht (3) aus Wolfram, Niob, Tantal oder Rhenium oder einer ihrer Legierungen besteht, und die Passivierung unter CO₂- und/oder O₂-Atmosphäre erfolgt.

19. Verfahren nach Anspruch 16 oder 17, **dadurch gekennzeich****net,** dass für den Einsatz in CO-Lasern die Oberflächenschicht (3) aus Wolfram, Niob, Tantal oder Rhenium oder einer ihrer Legierungen besteht, und die Passivierung unter CO- und/oder O₂-Atmosphäre erfolgt.

20. Verfahren nach Anspruch 16 oder 17, **dadurch gekennzeich****net,** dass für den Einsatz in N₂-Lasern, die Oberflächenschicht (3) aus Wolfram, Niob, Tantal oder Rhenium oder einer ihrer Legierungen besteht, und die Passivierung unter N₂ - und/oder O₂-Atmosphäre erfolgt.

21. Verfahren nach Anspruch 16 oder 17, **dadurch gekennzeich****net,** dass für den Einsatz in Chlorid-Excimer-Lasern die Oberflächenschicht (2) aus Wolfram, Chrom, Tantal oder Rhenium oder einer ihrer Legierungen besteht, und die Passivierung unter HCl- oder Cl₂-Atmosphäre erfolgt.

22. Verfahren nach Anspruch 16 oder 17, **dadurch gekennzeich****net,** dass für den Einsatz in Fluorid-Excimer-Lasern die Oberflächenschicht (3) aus Niob, Chrom, Tantal oder Rhenium oder einer ihrer Legierungen besteht, und die Passivierung unter HF- oder F₂-Atmosphäre erfolgt.

23. Elektrode für gepulste Gaslaser, in deren Oberflächenschicht (3) eine durch das Verfahren nach einem der Ansprüche 16 bis 22 gewonnene Passivierungsschicht ausgebildet ist.

## Claims

1. An electrode for pulsed gas lasers,
comprising a metallic carrier and a surface layer consisting of a material which is different from the carrier material,
characterized by the following combination of features:
the carrier (1) consists of a deeply drawable material,
the surface layer (3) has an average thickness between 3 µm and 20 µm,
and the surface layer (3) consists of one or more of the refractory metals tungsten, niobium, tantalum, rhenium and chromium and has a smaller electron work function and lower thermal and electrical conductivities than the material adjoining the underside of the surface layer (3).

2. An electrode according to claim 1, characterized in that the surface layer (3) has a thickness between 5 µm and 10 µm.

3. An electrode according to claim 1 or 2, characterized in that the carrier (1) consists of copper and the surface layer (3) lies directly on the carrier (1).

4. An electrode according tc claim 1 or 2, characterized in that an interlayer (2) made of a metal having higher electrical and thermal conductivities than the surface layer (3) is disposed between the carrier (1) and the surface layer (3).

5. An electrode according to claim 4, characterized in that the interlayer (2) has higher electrical and thermal conductivities than the carrier (1).

6. An electrode according to claim 4 or 5, characterized in that the interlayer (2) has a thickness of at least 5 µm.

7. An electrode according to claim 6, characterized in that the interlayer (2) has a thickness not in excess of 20 µm, preferably not in excess of 10 µm.

8. An electrode according to claim 4 or 5, characterized in that there is a gradual transition from the composition of the interlayer (2) to the composition of the surface layer (3).

9. An electrode according to any of claims 4 to 8, characterized in that the interlayer (2) consists of copper or aluminum.

10. An electrode according to any of the preceding claims, characterized in that the carrier (1) consists of copper, aluminum, brass, tin bronze or steel, particularly of a stainless steel.

11. An electrode according to claim 10, characterized in that the carrier (1) is a deeply drawn profiled member.

12. An electrode according to any of the preceding claims, characterized in that the refractory metals are present in the surface layer (3) as a homogeneous mixture or alloy.

13. A process of manufacturing an electrode according to any of the preceding claims, characterized in that
- the carrier (1) is formed by deep drawing to its final shape intended for the electrode,
- the metal for the surface layer (3) is deposited by physical vapor deposition (PVD).

14. A process according to claim 13 for manufacturing an electrode according to claim 4, characterized in that the metal or metals for the interlayer (2) is or are also deposited by PVD, resp. .

15. A process according to claim 13 or 14, characterized in that the surface layer (3) and optionally also the interlayer (2) are applied by magnetron sputtering.

16. A process according to claim 14 or 15, characterized in that the electrode while still in the PVD coating chamber is treated in such a gas atmosphere under the action of electric discharges, namely, in a low-pressure plasma, so as to form a passivating layer which contains the same components as that atmosphere in which the electrode is intended to be used in the laser or at least those of said components which are essential for the stabilization of the electrode.

17. A process according to claim 16, characterized in that the passivating treatment is performed only until a passivating layer having an average thickness of 100 nm has been formed.

18. A process according to claim 16 or 17, characterized in that for use in CO₂ lasers the surface layer (3) consists of tungsten, niobium, tantalum or rhenium or one of their alloys and the passivation is effected under a CO₂ and/or O₂ atmosphere.

19. A process according to claim 16 or 17, characterized in that for use in CO lasers the surface layer (3) consists of tungsten, niobium, tantalum or rhenium or one of their alloys and the passivation is effected under a CO and/or O₂ atmosphere.

20. A process according to claim 16 or 17, characterized in that for use in N₂ lasers the surface layer (3) consists of tungsten, niobium, tantalum or rhenium or one of their alloys and the passivation is effected under a N₂ and/or O₂ atmosphere.

21. A process according to claim 16 or 17, characterized in that for use in Excimer chloride lasers the surface layer (2) consists of tungsten, chromium, tantalum or rhenium or one of their alloys and the passivation is effected under a. HCl or Cl₂ atmosphere.

22. A process according to claim 16 or 17, characterized in that for use in Excimer fluoride lasers the surface layer (3) consists of niobium, chromium, tantalum or rhenium or one of its alloys and the passivation is effected under a HF or F₂ atmosphere.

23. An electrode for pulsed gas lasers, which is formed in its surface layer (3) with a passivating layer formed by the process according to any of claims 16 to 22.

## Revendications

1. Electrode pour laser à gaz en régime pulsé, qui comporte un support métallique et une couche superficielle formée d'une matériau différent du matériau du support, caractérisée par la combinaison de propriétés suivante :
- le support (1) se compose d'un matériau emboutissable,
- la couche superficielle (3) a une épaisseur moyenne comprise entre 3 µm et 20 µm, et
- la couche superficielle (3) se compose d'un ou plusieurs des métaux réfractaires tungstène, niobium, tantale, rhénium et chrome et elle a une plus petite capacité de sortie d'électrons et une plus petite conductivité thermique et électrique que le matériau adjacent en dessous de la couche superficielle (3).

2. Electrode selon la revendication 1, caractérisée en ce que la couche superficielle (3) a une épaisseur comprise entre 5 µm et 10 µm.

3. Electrode selon la revendication 1 ou 2, caractérisée en ce que le support (1) se compose de cuivre et la couche superficielle (3) est située directement sur le support (1).

4. Electrode selon la revendication 1 ou 2, caractérisée en ce qu'il est prévu entre le support (1) et la couche superficielle (3) une couche intermédiaire (2) formée d'un métal ayant une plus grande conductivité électrique et thermique que la couche superficielle (3).

5. Electrode selon la revendication 4, caractérisée en ce que la couche intermédiaire (2) a une plus grande conductivité électrique et thermique que le support (1).

6. Electrode selon la revendication 4 ou 5, caractérisée en ce que la couche intermédiaire (2) a une épaisseur d'au moins 5 µm.

7. Electrode selon la revendication 6, caractérisée en ce que la couche intermédiaire (2) a une épaisseur au maximum de 20 µm, de préférence au maximum de 10 µm.

8. Electrode selon la revendication 4 ou 5, caractérisée en ce que la composition de la couche intermédiaire (2) rejoint graduellement la composition de la couche intermédiaire (3).

9. Electrode selon une des revendications 4 à 8, caractérisée en ce que la couche intermédiaire (2) se compose de cuivre ou d'aluminium.

10. Electrode selon une des revendications précédentes, caractérisée en ce que le support (1) est formé de cuivre, d'aluminium, de laiton, de bronze ou d'acier, notamment d'un acier allié.

11. Electrode selon la revendication 10, caractérisée en ce que le support (1) est une pièce de forme emboutie.

12. Electrode selon une des revendications précédentes, caractérisée en ce que les métaux réfractaires intervenant dans la couche superficielle (3) se présentent sous forme d'un alliage ou mélange homogène.

13. Procédé de fabrication d'une électrode selon une des revendications précédentes, caractérisé par les étapes consistant à :
- amener le support (1), par emboutissage, à sa forme finale prévue pour l'électrode,
- séparer le métal pour la couche superficielle (3) par séparation physique en phase vapeur (PVD).

14. Procédé selon la revendication 13 pour la fabrication d'une électrode selon la revendication 4, caractérisé en ce que le métal ou les métaux pour la couche intermédiaire (2) est ou sont séparés par séparation physique en phase vapeur (PVD).

15. Procédé selon la revendication 13 ou 14, caractérisé en ce que la couche superficielle (3), et le cas échéant également la couche intermédiaire (2), sont déposées par pulvérisation cathodique par magnétron.

16. Procédé selon la revendication 14 ou 15, caractérisé en ce que l'électrode est en outre traitée dans la chambre de dépôt par traitement PVD dans une atmosphère gazeuse avec production de décharges électriques, notamment dans un plasma à basse pression, avec formation d'une couche de passivation qui contient les mêmes composants ou bien, parmi ceux-ci,- au moins les composants essentiels pour la stabilisation des électrodes, que l'atmosphère dans laquelle l'électrode doit être utilisée dans un laser conformément aux prescriptions.

17. Procédé selon la revendication 16, caractérisé en ce que la durée du traitement de passivation n'est pas plus longue que ce qui permet d'obtenir une couche de passivation ayant une épaisseur moyenne de 100 nm.

18. Procédé selon la revendication 16 ou 17, caractérisé en ce que, pour une utilisation dans des lasers à CO₂, la couche superficielle (3) se compose de tungstène, de niobium, de tantale ou de rhénium ou bien d'un de leurs alliages, et la passivation est effectuée dans une atmosphère de CO₂ et/ou d'O₂.

19. Procédé selon la revendication 16 ou 17, caractérisé en ce que, pour l'utilisation dans des lasers à CO, la couche superficielle (3) se compose de tungstène, de niobium, de tantale ou de rhénium ou bien d'un de leurs alliages, et la passivation est effectuée dans une atmosphère de CO et/ou d'O₂.

20. Procédé selon la revendication 16 ou 17, caractérisé en ce que, pour l'utilisation dans des lasers à N₂, la couche superficielle (3) se compose de tungstène, de niobium, de tantale ou de rhénium ou d'un de leurs alliages, et la passivation est effectuée dans une atmosphère de N₂ et/ou d'O₂.

21. Procédé selon la revendication 16 ou 17, caractérisé en ce que, pour l'utilisation dans des lasers-excimer au chlorure, la couche superficielle (2) se compose de tungstène, de chrome,de tantale ou de rhénium ou bien d'un de leurs alliages, et la passivation est effectuée dans une atmosphère de HCl ou de Cl₂.

22. Procédé selon la revendication 16 ou 17, caractérisé en ce que, pour l'utilisation dans des lasers-excimer au fluorure, la couche superficielle (3) est formée de niobium, de chrome, de tantale ou de rhénium ou bien de leurs alliages et la passivation est effectuée dans une atmosphère de HF ou de F₂.

23. Electrode pour des lasers à gaz en régime pulsé, dans la couche superficielle (3) de laquelle est formée une couche de passivation, obtenue par le procédé selon une des revendications 16 à 22.
